# EUROPÄISCHE PATENTSCHRIFT

(11) **EP 0 814 901 B1**
(45) Veröffentlichungstag und Bekanntmachung des Hinweises auf die Patenterteilung: **26.05.1999**
(21) Anmeldenummer: 95912255.7
(22) Anmeldetag: 20.03.1995
(51) Int. Cl.: B01J 12/00, A62D 3/00, F23G 7/00, F23G 7/06

(54) **VERFAHREN ZUR CHEMOTHERMISCHEN UMSETZUNG FLIESSFÄHIGER VERBINDUNGEN UND KONVERTER ZUR DURCHFÜHRUNG DES VERFAHRENS**
FLUID COMPOUND THERMOCHEMICAL CONVERSION PROCESS AND CONVERTER
PROCEDE DE CONVERSION CHIMIOTHERMIQUE ET CONVERTISSEUR CHIMIOTHERMIQUE DE COMPOSES FLUIDES

(43) Veröffentlichungstag der Anmeldung: 07.01.1998
(73) Patentinhaber: Zettner, Michael L., 77663 Ashdod (IL); Schmidt, Hermann, 91781 Weissenburg (DE)
(72) Erfinder: ZETTNER, Michael, L., IL-Ashdod 77663 (IL)
(74) Vertreter: Brose, Manfred, Dr.
(86) Internationale Anmeldenummer: EP9501031
(87) Internationale Veröffentlichungsnummer: WO9629143

(56) Entgegenhaltungen:
- WO-A-80/00741
- DE-A- 3 942 962
- FR-A- 2 468 070
- GB-A- 1 387 730
- US-A- 3 098 883
- US-A- 3 586 732
- US-A- 3 985 494

## Beschreibung

Die Erfindung betrifft ein Verfahren zur chemothermischen Umsetzung fließfähiger oder in einen fließfähigen Zustand überführbarer Verbindungen und einen Konverter zur Durchführung des Verfahrens.

Es ist allgemein bekannt, daß durch ausreichend hohe Temperaturen sämtliche chemischen Verbindungen, also auch nichtbrennbare und stabile Verbindungen, in ihre atomaren Bestandteile zerlegt und damit die atomare Struktur beseitigt werden können. Materie mit so hohen Temperaturen, daß die molekularen Strukturen zerstört bzw. aufgelöst sind, wird als Plasma oder als Materie in einem plasmaähnlichem Zustand bezeichnet. Da für die Erzeugung eines Plasmas sehr viel Energie benötigt wird, ist ein Plasma grundsätzlich auch teuer. Dieses spielt ganz besonders dann eine große Rolle, wenn durch ein Plasma stabile organische, insbesondere toxische Verbindungen im großtechnischem Maßstab beseitigt werden sollen. Die Zerlegung von stabilen organischen, insbesondere toxischen Verbindungen auf chemothermischem Wege mittels eines Plasmas erfordert also die kostengünstige Erzeugung des benötigten Plasmas.

Diese chemothermsche molekulare Zerlegung sollte aus den vorbeschriebenen Gründen gerade auf dem notwendigen, jedoch niedrigstmöglichen Temperaturniveau stattfinden, auf dem sich der molekulare Zusammenhalt der zum Einsatz kommenden Stoffe auflöst. Wird also eine Temperatur von angenommen 1.923 Grad Celsius benötigt um den molekularen Zusammenhalt bestimmter Moleküle vollständig zu zerlegen,so wäre das niedrigstmögliche Temperaturniveau bei dem eine vollständige Zerlegung stattfindet, etwa 2.000 Grad Celsius, wenn ein kleiner Sicherheitszuschlag hinzugerechnet wird.

Es ist beispielsweise grundsätzlich möglich, ein Plasma auf elektrischem Wege zu erzeugen. Ein elektrisch erzeugtes Plasma mit einer Temperatur von ca. 10.000 Grad Celsius wäre jedoch nicht auf dem niedrigst benötigten Temperaturniveau. Es wäre ohne weiteres möglich, beim Einsatz eines solchen elektrischen Plasmas die Temperatur von 10.000 Grad Celsius durch Beimischung von kühlen Gasen abzusenken. In jedem Fall wäre aber der Energiebedarf höher als notwendig, da man entweder im größeren Abstand von der Plasmaquelle den Temperaturgradienten folgend niedrigere Temperaturen erreicht, bis schließlich die angestrebten 2.000 Grad Celsius erreicht sind oder das elektrisch erzeugte Plasma wird nur als Wärmequelle mit Zumischung benutzt. Im ersten Fall wären alle heißeren Temperaturzonen im geringeren Abstand von der Plasmaquelle die über 2.000 Grad Celsius liegen zu heiß, es würde also mehr Energie aufgewendet als notwendig ist, im zweiten Fall wäre die für den Wärmetausch benötigte Tauscheroberfläche und damit auch die Wärmeverluste sehr groß. In beiden Anwendungsfällen eines elektrisch erzeugten Plasmas ist auch der Primärenergieeinsatz höher als notwendig, da zuerst die Stromerzeugung und dann die Plasmaerzeugung auf elektrischem Wege nicht sehr effektiv sind.

Aus der FR,A, 2 468 070 (Brola) ist eine Verbrennun gsanlage bekannt, bei der die Verbrennungsluft mit Hilfe von Gebläsen erst durch einen Ringspalt gedrückt wird, bevor sie der Verbrennung zugeführt wird. Der Grund hierfür ist die Kühlung der Reaktionskammer. Anschließend wird die Luft mittels mehrerer Düsen an mehreren Stellen in die Reaktionskammer eingeblasen. Dieses soll laut Druckschrift zu einer besseren Umsetzung führen. Die umzusetzenden Substanzen werden ebenfalls unter Druck zugeführt. Damit wird auch eine gewisse Verzögerung der Reaktion erreicht, da ein Teil der Edukte erst nach und nach zugegeben wird. Die Form der Reaktionskammer, die Anordnung mehrerer Düsen und der Einsatz von leichtem Überdruck ist aus dieser Druckschrift bekannt. Der überdruck ist jedoch nicht näher definiert und er ist schon alleine dafür notwendig, um die hohen Reibungswiderstände in den vorgeschalteten Ringspalten und Röhren zu überwinden. Außerdem läßt die gezeigte gezeigte Verbrennungsanlage den Schluß zu, daß im Verbrennungsraum selbst kein überdruck mehr herrscht. Eine Vorreaktion im Sinne der Erfindung ist nicht erkennbar. Es handelt sich vielmehr um einen gewöhnlichen Verbrennungsprozeß.

In der GB,A, 1 387 730 (Continental Carbon Company) wird die abstrakte Verzögerung einer chemischen Reaktion beschrieben, die in der Weise erfolgt, daß die Substanzen erst nach und nach in den Reaktionsraum zugegeben werden. Dies stellt eine gewollte Verzögerung der Reaktion dar, wobei die Verzögerung in der Reaktionskammer mittels mehrerer Einspeisungen stattfindet.

Aus der US,A, 3 586 732 (TRW Inc.) sind die Merkmale Pilot, Kühlmantel sowie die Zylinderform als günstigte Form für den Reaktionsraum bekannt.

Der Erfindung liegt daher die Aufgabe zugrunde, einen in Bezug auf seine Anwendung oder Verwendung frei verfügbaren Bereich mit einem Plasma oder bei niedrigeren Temperaturen einen frei verfügbaren Bereich mit der gerade benötigten Arbeitstemperatur zu erreichen und dessen Erzeugung mit möglichst niedrigen Kosten verbunden ist.

Zur Lösung dieser Aufgabe geht die Erfindung gattungsgemäß aus von einem Verfahren zur chemothermischen Umsetzung fließfähiger oder in einen fließfähigen Zustand überführbarer Verbindungen (Einsatzstoffe), insbesondere organischer oder komplexer toxischer Verbindungen in niedermolekulare organische oder anorganische Verbindungen, in einem Plasma oder einem plasmaähnlichen heißen Gas, bestehend aus mindestens einem Vorverfahrensschritt mit Reaktionspartnern, die zu einer exothermen Reaktion führen, zur Erzeugung der Energie für die Umsetzungsreaktion und mindestens einem nachfolgenden Hauptverfahrensschritt mit der Umsetzungsreaktion.
Die Erfindung besteht darin, daß im Vorverfahrensschritt in einem Mischbereich mit relativ kleinem Querschnitt die Strömungsgeschwindigkeiten der Reaktionspartner größer sind als die Ausbreitungsgeschwindigkeit einer möglichen Reaktionsfront der beiden Reaktionspartner, wodurch eine vollständige Durchmischung der unter Überdruck stehenden und ein exothermes Stoffgemisch bildenden Reaktionspartner im Mischbereich erfolgt, ohne daß dieses Gemisch bereits im Mischbereich reagieren kann, am Ende des Mischbereiches nach einer durch Vergrößerung des Strömungsquerschnitts herbeigeführten Verringerung der Strömungsgeschwindigkeit, beide Reaktionspartner dem überdruck entsprechend mit hoher Reaktionsgeschwindigkeit und Energiedichte in einer ersten Teilreaktion miteinander reagieren und im Hauptverfahrensschritt ein zweites umzusetzendes Stoffgemisch, bestehend aus dem Einsatzstoff und einem Umsetzungsstoff, die zur Umsetzung benötigte Energie durch Mischung mit den in einem hohen Temperatur- und Druckzustand befindlichen Reaktionsprodukten der ersten Teilreaktion von diesen erhält.

In den Unteransprüchen zwei bis dreizehn werden Fortbildungen und Ausgestaltungen der Erfindung beschrieben.

Nachfolgend wird zuerst das Verfahren nach der Erfindung beschrieben. In den Zeichnungen ist sodann ein Konverter zur Durchführung des Verfahrens nach der Erfindung wiedergegeben. Es zeigen :
- Fig. 1: die Ansicht des Konverters mit einem senkrechten rechtwinkeligen Ausschnitt,
- Fig. 1A: den Konverter nach Figur 1 mit Vorheizkanälen,
- Fig. 1B: den Konverter nach Figur 1A mit einer Piloteinrichtung,
- Fig. 2: einen Schnitt durch eine Einspeisungseinheit,
- Fig. 3: einen senkrechten Schnitt durch zwei Einspeisungseinheiten und
- Fig. 3A: eine vergrößerte Darstellung von zwei Einspeisungseinheiten, entsprechend dem kreisförmigen Ausschnitt von Figur 1

Die Erfindung ist anwendbar für sämtliche fließfähige oder in einen fließfähigen Zustand überführbare Stoffe. Hierzu zählen insbesondere auch Suspensionen und Aerosole mit feinverteilten Flüssigkeiten (Nebel) oder festen Partikeln (Rauch, Staub).

Zunächst sollen an einem Beispiel, nämlich der Plasmaerzeugung aus Holz als einzigem Energieträger, die Zusammenhänge zwischen überdruck, erreichbarer Temperaturhöhe und der Reaktionszeit dargelegt werden. Holz verbrennt, wenn man es anzündet, mit einer Temperatur von ca. 400 Grad Celsius. Der Wärmeinhalt des Holzes beträgt ca. 15 MJ/kg, d.h. diese Wärmemenge wird beim Verbrennen des Holzes abgegeben. Die Zeit in der diese Wärmemenge abgegeben wird bestimmt die Verbrennungstemperatur. Um ein Kilogramm Holz eine Stunde lang brennen zu lassen, werden 78 kg Luft benötigt. Ohne Berücksichtigung der Wärmeverluste nach außen würde ein Kilogramm Holz in etwa 30 Minuten restlos verbrennen und dabei Rauchgas mit einer Temperatur von 400 Grad Celsius an die Umgebung abgeben.

Wollte man die Temperatur dieser vorbeschriebenen Verbrennung steigern, z.B. um den Faktor sieben von 400 auf 2.800 Grad Celsius, dann müßte die Verbrennung mit der gleichen Luft- und Holzmenge in entsprechend kürzerer Zeit erfolgen. Die bei der Verbrennung erfolgende chemische Umsetzung der Kohlenwasserstoffe, also des Holzes, müßte in einem Siebtel der ursprünglichen Zeit von 30 Minuten, also in 4,2 Minuten vollständig abgeschlossen sein.

Mahlt man das Holz zu feinem Holzmehl, mischt es mit Luft und entzündet es, wird es explodieren. Je nach der Menge der beigemengten Luft wird dieses Holzmehl-Luft Gemisch bei seiner Verbrennung die sich aus der im Holz enthaltenen Wärmemenge ergebende Temperatur einstellen. Für Bruchteile einer Sekunde würde man die hohe Temperatur von 2.800 Grad Celsius erreichen oder überschreiten, jedoch wäre diese Temperatur nicht von Dauer.

Ein kontinuierlicher Prozess mit einer so hohen Temperatur wie die im obigen Beispiel genannten 2.800 Grad Celsius bei der Verbrennung von Holz als Energieträger wird nachfolgend beschrieben. Dadurch lassen sich mit sehr niedrigen Kosten gezielt sehr hohe Temperaturen für die Umsetzung von Stoffen aller Art erreichen. Die Energiedichte von Umsetzungsprozessen, seien es nun Verbrennungen, Pyrolysen, Hydrolysen odet andere Zerlegungsprozesse läßt sich mittels der Erfindung steuern und bestimmen.

Ziel der Erfindung ist die chemothermische Erzeugung eines kontinuierlichen plasmaähnlichen Zustandes auf dem niedrigstbenötigten Energieniveau und bei der niedrigstbenötigten Temperatur. Dazu geht die Erfindung von einer Kombination zweier kontinuierlich ablaufender chemischer Teilreaktionen aus.

In einem Vorverfahrensschritt dient die erste Teilreaktion der Erzeugung von frei verwendbarer Energie, die im Hauptverfahrensschritt für die Durchführung der eigentlichen Umsetzungsreaktion eingesetzt werden kann. Dabei werden im Vorverfahrensschritt ein, zwei oder mehrere Reaktionspartner unter Druck in eine Einspeisungseinheit geleitet. Dort werden die Reaktionspartner in einem mit sehr hoher Strömungsgeschwindigkeit durchströmten Bereich gemischt (Mischphase) und durch einen übergangsbereich hindurch in eine mit geringerer Strömungsgeschwindigkeit durchströmte Zone geleitet, in der sie dann erst miteinander reagieren. Auch in dem mit geringerer Strömungsgeschwindigkeit durchströmten Bereich oder Zone steht das Stoffgemisch immer noch unter Druck. Infolge der extrem guten Durchmischung im Mischbereich erhalten die Reaktionspartner eine sehr große Reaktionsoberfläche. Durch den Druck, unter dem die Reaktionspartner stehen, ist eine sehr hohe Energiedichte gegeben.

Nimmt man für den Vorverfahrensschritt als Reaktionspartner zur Energieerzeugung z.B. Methan, Acetylen und Luft oder wie im obigen Beispiel Holz in Form von Holzmehl und Luft, so wird erreicht, daß das Gemisch bei einer Zündung in den mit geringerer Strömungsgeschwindigkeit durchströmten Bereich sofort vollständig, fast explosionsartig reagiert. Durch den Überdruck wird die Energie bzw. die Wärmemenge in einem kleineren Volumen frei, als dies bei atmosphärischem Druck der Fall wäre, sodaß die aus der Reaktion resultierende Temperatur entsprechend höher ist.

Durch die sehr gute Vermischung der reagierenden Reaktionspartner in dem mit sehr hoher Strömungsgeschwindigkeit durchströmten Mischbereich wird die Reaktionsoberfläche an der eine Umsetzung der Reaktionspartner stattfindet entsprechend größer. Dadurch erfolgt die chemische Umsetzung wesentlich schneller. Dadurch wird die bei der Reaktion insgesamt freigesetzte Wärmemenge in kürzerer Zeit freigesetzt, wodurch die Temperatur ebenfalls ansteigt.

Durch Vorheizen eines oder mehrerer Reaktionspartner, in unserem Beispiel kann es die Luft sein, wird die Zündwilligkeit des Gemisches und dadurch die Reaktionsgeschwindigkeit deutlich heraufgesetzt. Dadurch wird ebenso die Reaktionszeit verkürzt und wird die bei der Reaktion frei werdende Energie zusätzlich in noch kürzerer Zeit freigesetzt, was wiederum zu einem weiteren Temperaturanstieg beiträgt. In dem mit sehr hoher Strömungsgeschwindigkeit durchströmten Mischbereich, in dem die Komponenten gemischt werden, sind diese nach einer bestimmten Strecke bereits vollständig durchmischt. Die hohe Strömungsgeschwindigkeit in diesem Bereich verhindert, daß das Gemisch sich entzündet bzw. eine Flammenfront oder Reaktionsfront in diesen Mischbereich zurückschlägt.

Die Strömungsgeschwindigkeit der einzelnen Reaktionspartner bzw. des Stoffgemisches in dem mit sehr hoher Strömungsgeschwindigkeit durchströmten Mischbereich muß daher größer sein als die Geschwindigkeit, mit der die mögliche Reaktionsfront sich vorwärts bewegt. Dementsprechend muß die Strömungsgeschwindigkeit des Stoffgemisches in dem mit geringerer Strömungsgeschwindigkeit durchströmten Bereich niedriger sein, um eine Ausbreitung der Flammenfront bzw. der Reaktionsfront zu ermöglichen. Dieser mit geringerer Strömungsgeschwindigkeit durchströmte Bereich (Reaktionsbereich) ist so gestaltet, daß im vorderen Bereich, der sich direkt an den Mischbereich anschließt, eine wesentlich niedrigere Strömungsgeschwindigkeit herrscht, als im hinteren, bzw. weit entfernteren Reaktionsbereich. Dadurch wird sich die erste Teilreaktion in unmittelbarer Nähe des Übergangs vom Mischbereich zum Reaktionsbereich abspielen. Der Mischbereich ist nicht vergleichbar mit dem gleichfalls mit sehr hoher Strömungsgeschwindigkeit durchströmten Bereich, wie es ihn bei Gasbrennern gibt. Bei einem Gasbrenner dient der mit sehr hoher Strömungsgeschwindigkeit durchströmte Bereich auch der Durchmischung, jedoch stehen diese zu durchmischende Gase nicht beide unter Druck und sind häufig auch nicht gegen die Umgebung abgeschirmt. Dadurch läßt sich auch kein Überdruck aufbauen. Im Mischbereich der Einspeisungseinheit steht jedoch das Stoffgemisch unter Überdruck. Der überdruck kann mehrere Atmosphären betragen und ist notwendig, damit das Gasgemisch in den in dem mit geringerer Strömungsgeschwindigkeit durchströmten Reaktionsbereich auch noch ausreichend Überdruck hat.

Zu diesem Zweck muß der Mischbereich gasdicht gegen seine Umgebung abgedichtet sein und auch von der Statik her für den vorhandenen Überdruck ausgelegt sein. Eine hohe Strömungsgeschwindigkeit, gegebenfalls mit Turbulenz, besitzt bei Überdruck wesentlich andere Kenndaten als in einem nahezu atmosphärisch arbeitenden System. Allein die Gasreibung, möglicherweise die entscheidende Kenngröße für den Mischbereich, ist bezüglich ihrer Größe und ihrer Auswirkung bei atmosphärischen oder überatmosphärischen Systemen völlig unterschiedlich.

Im zweiten Vorverfahrensschritt läuft die zweite Teilreaktion zunächst etwa parallel zur ersten Teilreaktion ab. Ziel der zweiten Teilreaktion ist es, die Stoffe, deren molekulare Struktur zerlegt werden soll, mit anderen Reaktionspartnern, die die Zerlegung unterstützen oder beschleunigen usw. innig zu vermischen.

Die Soffe, deren Struktur zerlegt werden soll, werden nachfolgend als Einsatzstoffe bezeichnet. Der Einsatzstoff oder die Einsatzstoffe werden alleine oder zusammen mit einem oder mehreren Umsetzungsstoffen für die Zerlegung bzw. Zerlegungsreaktion unter druck in eine Einspeisungseinheit geleitet. Dort werden sie in einem mit sehr hoher Strömungsgeschwindigkeit durchströmten Mischbereich gemischt. Ähnlich wie in dem mit sehr hoher Strömungsgeschwindigkeit durchströmten Mischbereich für die erste Teilreaktion zur Erzeugung von frei verfügbarer Wärmenenergie werden die verschiedenen Reaktionspartner auch hier gemischt. Die gemischten Reaktionspartner bestehend aus Einsatzstoff und Umsetzngsstoff gelangen dann in den Reaktionsbereich für das Hauptverfahren, in dem eine geringere Strömungsgeschwindigkeit herrscht und treffen dort auf die Reaktionsprodukte der ersten Teilreaktion.

Wie oben bereits beschrieben worden ist, wurden die Reaktionspartner der ersten Teilreaktion in den Reaktionsbereich mit niedriger Strömungsgeschwindigkeit eingebracht, sodaß ihre chemische Reaktion innerhalb extrem kurzer Zeit erfolgt und dadurch, wie oben gleichfalls beschrieben, in kürzester Zeit und bei kleinem Volumen sehr hohe Temperaturen erzeugt werden. In dieses plasmaähnliche Feld wird nun das Gemisch der zweiten Teilreaktion eingebracht. Durch die Vermischung mit der oder den Reaktionsprodukten der ersten Teilreaktion findet nun durch die zusätzlich eingegebenen Umsetzungsstoffe der zweiten Teilreaktion eine chemothermische Zerlegungsreaktion statt.

In diesem plasmaähnlichen Bereich sollen nun die Reaktionspartner der zweiten Teilreaktion solange gehalten werden, wie es für eine zuverlässig vollständige Zerlegung notwendig ist.Deshalb werden bereits bei der Einspeisung der Reaktionspartner für die zweite Teilreaktion diejenigen Umsetzungsstoffe beigegeben, deren Reaktionsprodukte zusammen mit den Reaktionsprodukten des oder der Einsatzstoffe und des oder Reaktionsprodukten der ersten Teilreaktion zusammen, eine beabsichtigte Zusammensetzung ergeben, z.B. eines oder mehrere natürliche oder technische Stoffe, wenn diese den plasmaähnlichen Bereich wieder verlassen haben. Bei der zweiten Teilreaktion, die annähernd parallel zur ersten Teilreaktion abläuft, ist es unter Umständen nicht so wichtig, ob die Umsetzungsreaktion bereits im Mischbereich einsetzt oder erst in dem sich anschließenden, mit geringerer Strömungsgeschwindigkeit durchströmten Bereich. So wird es in fast allen Fällen sinnvoll sein, einen oder mehrere Reaktionspartner der zweiten Teilreaktion bereits vorzuwärmen oder aufzuheizen, bevor sie in die Einspeisungseinheiten gelangen. Dadurch wird weniger Wärmeenergie in dem mit geringer Strömungsgeschwindigkeit durchströmten Reaktionsbereich verbraucht und dadurch die Gesamtreaktion effektiver.

Ist der Einsatzstoff bekannt, dann läßt sich die notwendige Temperatur ermittelt, bei der die molekulare Struktur des Einsatzstoffes vollständig zerlegt wird. Ebenso läßt sich aufgrund der in den Reaktionspartnern der ersten Teilreaktion enthaltenen Wärmeenergie und des gewählten und herrschenden Druckes, die zu erwartende Temperatur errechnen. Aus der Temperatur, der Wärmemenge und den Stoffdaten des Einsatzstoffes, insbesondere seines Energiebedarfs bei der Umsetzungs- bzw. Zerlegungsreaktion, läßt sich errechnen, welche Menge der Reaktionspartner der ersten Teilreaktion notwendig sind oder welche Menge des Einsatzstoffes zugegeben werden kann oder deren optimales Mengenverhältnis zueinander.

Weiterhin läßt sich genau vorausbestimmen, welche Reaktionsprodukte sich beim Verlassen des plasmaähnlichen Bereiches bilden werden. Ihre Bildung ergibt sich aus den eingesetzten Reaktionspartnern der ersten und zweiten Teilreaktion, wobei sich die Stoffe qualitativ und quantitativ mit geringen Abweichungen angeben lassen. Diese Abweichungen liegen bei konstant eingegebenen Stoffen im Bereich von etwa 0,001 % bis 0,0005 %, bezogen auf die eingegebene Stoffmenge der Reaktionspartnern der ersten und zweiten Teilreaktionen.

Durch die Aufteilung in zwei getrennte Einspeisungen erreicht man eine hohe Stabilität der Reaktion. Die erste Teilreaktion beginnt unmittelbar nach dem Austritt aus dem Mischbereich, also in dem Übergangsbereich, in dem sich die Geometrie des Mischbereiche, so verändert, daß die Strömung niedriger wird und eine Ausbreitung der Flammenfront bzw. der Reaktionsfront möglich ist. In diesem verhältnismäßig kleinen Bereich stabilisiert sich die energieliefernde erste Teilreaktion.

Würden die Reaktionspartner der zweiten Teilreaktion gleichzeitig mit den Reaktionspartnern der ersten Teilreaktion eingespeist, dann würde dies zu einer Instabilität führen. Beim Anfahren bzw. beim Starten des Konverters kann das zweite Stoffgemisch nicht sofort zugegeben werden, sondern erst dann, wenn sich die energieliefernde erste Teilreakion stabilisiert hat und der Konverter sich auf seine Betriebstemperatur aufgeheizt hat. In dieser Anfahrseit ist das Volumen der eingegebenen Stoffe kleiner, da die Reaktionspartner der zweiten Teilreaktion noch nicht mit eingespeist sind. Dadurch ist die Energiedichte niedriger, da durch das kleinere Volumen auch der Druck niedriger ist. Wie vorstehend beschrieben worden ist, resultiert aber die hohe Temperatur aus den genau aufeinander abgestimmten Verhältnissen von Druck, Reaktionsoberfläche und Energiedichte. Außerdem ist es nicht möglich, Teilkomponenten der Reaktion bezüglich ihres Volumens zu verändern, ohne daß dies direkten Einfluß auf die Strömungsverhältnisse im Mischbereich hat.

Der mit sehr hoher Strömungsgeschwindigkeit durchströmte Mischbereich ist aber, wie bereits beschrieben, die Voraussetzung dafür, daß die erste Teilreaktion nicht berets im Mischbereich, sondern erst in dem sich anschließenden Reaktionsbereich zu einer plötzlichen Reaktion mit der Folge der sehr hohen Temperatur kommt, die zu einem plasmaähnlichem Zustand führt. Diese Trennung der Teilreaktionen ist also eine Voraussetzung für die stabile und konstante Erzeugung eines plasmaähnlichen Zustandes in dem sich an den Mischbereich anschließenden, mit geringerer Strömungsgeschwindigkeit durchströmten Reaktionsbereich. Wie bei einer Zwangsführung in der Mechanik wird hier eine chemische Reaktion - die erste Teilreaktion - mit gezwungener Verzögerung zur plötzlichen Reaktion gebracht. Durch diese zwangsgeführte chemische Reaktion wird die Energiedichte gezielt verändert. Diese Zwangsführung der Reaktion führt zur Steuerbarkeit der Energiedichte der Reaktion und damit zur Steuerbarkeit der Reaktion.

Durch die Aufspaltung der Gesamtreaktion in zwei Teilreaktion erreicht man mit einfachem Aufwand Zerlegungsraten für die Einsatzstoffe, die so hoch sind, daß ein Nachweis über noch vorhandene, also nicht zerlegte Einsatzstoffe mit den heute bekannten Meßmethoden nicht mehr möglich ist. Erreicht werden diese hohen Zerlegungsraten durch die Zugabe von Umsetzungsstoffen, die bei der zweiten Teilreaktion den Einsatzstoffen beigemischt werden.

Ein Beispiel verdeutlicht dies: dem Einsatzstoff Tetrafluormethan, ein Stoff mit hoher thermischer Stabilität, wird Methan beigemischt. Das Mischungsverhältnis wird so gewählt, daß ein leichter überschuß an Wasserstoffatomen, gebunden im Methan gegenüber den Fluoratomen, die im Tetrafluormethan gebunden sind, besteht. Gelangt dieses Gemisch nun in den an den Mischbereich sich anschließenden, mit geringer Strömungsgeschwindigkeit durchströmten Reaktionsbereich, in dem entsprechend ausreichend hohe Temperatur durch die erste Teilreaktion erzeugt worden ist, dann findet nicht nur eine thermische Zerlegung sonder auch chemische Reaktion statt. Der frei werdenden Wasserstoff des Methans reagiert mit dem Fluor des Einsatzstoffes Tetrafluormethan. Die thermisch nicht so stabilen Methanmoleküle werden innerhalb weniger Millisekunden im reißen, plasmaähnlichen Bereich aufgespalten. Eine zusätzliche Vorheizung des Methans und/oder des Tetrafluormethans vor der Einspeisung in den Mischbereich beschleunigt diese Aufspaltung. Das Methan setzt Wasserstoff als sogenanntes freies Radikal frei. Dieser freigesetzte radikale Wasserstoff "zerlegt" zusätzlich zu der thermischen Reaktion das Tetrafluormethan. Durch die Durchmischung der zwei Reaktionspartner der zweiten Teilreaktion, in dem vorliegenden Beispiel Tetrafluormethan und Methan, im Mischbereich der zweiten Teilreaktion, wird, wie bei der ersten Teilreaktion, die größtmögliche Reaktionsoberfläche zwischen den beiden Reaktionspartnern geschaffen. Dadurch kann es innerhalb von Millisekunden zu einer vollständigen Reaktion zwischen dem Wasserstoff des Methans und dem Fluor des Tetrafluormethans kommen, wenn das Gemisch in den an den Mischbereich sich anschließenden Reaktionsbereich eintritt, in dem die sehr hohen Temperaturen herrschen.

Der Überdruck unter dem die Reaktion stattfindet beschleunigt die chemische Umsetzung zusätzlich, da der Überdruck höhere Dichte und höhere Dichte kleinere Abstände zwischen den Reaktionspartnern bedeuten. Kleinere Abstände bedeuten eine schnellere Reaktion. Die Reaktionsgeschwindigkeit steigt, wie aus der Verfahrenstechnik bekannt ist, exponential mit dem Druck an. Obgleich die vorbeschriebene Reaktion zwischen dem Fluor und dem Wasserstoff einen Teil der aus der ersten Teilreaktion freiwerdenden Wärmeenergie verbraucht, wird dennoch durch die parallel ablaufende erste Teilreaktion der plasmaähnliche Zustand konstant aufrecht erhalten.

Durch eine entsprechende Gestaltung des Konverters, insbesondere durch die entsprechende Anordnung der verschiedenen Mischbereiche wird auch eine möglichst große Oberfläche zwischen den Reaktionen der ersten und der zweiten Teilreaktion im mit geringerer Strömungsgeschwindigkeit durchströmten Reaktionsbereich geschaffen. Im Reaktionsbereich ist die Strömungsgeschwindigkeit wesentlich niedriger als im Mischbereich. Deshalb wirken sich Veränderungen der zweiten Teilreaktion nicht nachteilig aus. Die große Oberfläche zwischen den Reaktionsprodukten der ersten Teilreaktion, dem Plasmaähnlichem Bereich, und den Reaktionspartnern der zweiten Teilreaktion führt zu einem schnellen Wärmeübergang auf die Reaktionspartner der zweiten Teilreaktion.

Wie vorbeschrieben worden ist, führt die erste Teilreaktion zu einem plasmaähnlichen Zustand mit einer sehr hohen Temperatur. Die im plasmaähnlichem Zustand frei werdende Wärmeenergie wird zu einem sehr großen Teil als Strahlungswärme abgegeben, deren übertragung bekanntlich mit Lichtgeschwindigkeit erfolgt. Um diese abgegebene Wärme auf dem hohen Temperaturniveau zu halten, muß das Volumen, an welches diese Wärme abgegben wird, sehr klein sein. Bei den vorbeschriebenen Abläufen besteht die größte Schwierigkeit darin, den mit sehr hoher Strömungsgeschwindigkeit durchströmten Mischbereich der ersten energieliefernden Teilreaktion richtig zu gestalten. Es ist für die Gesamtreaktion entscheident, daß die chemische Umsetzung zwischen den Reaktionspartnern der ersten Teilreaktion nicht schon in dem Mischbereich beginnt. Dadurch würde die frei werdende Wärmemenge über einen größeren Zeitraum und an ein größeres Volumen abgegeben, was zur Absenkung der erreichten Temperatur führen würde. Deshalb muß gerade im Mischbereich, wo die Vorwärmung, die optimale Durchmischung und der Druck zur sofortigen Reaktion drängen, verhindert werden, daß z.B. Druckabfall bei Druckschwankungen im Reaktionsbereich auf den Mischbereich übergreift.

In den nachfolgend beschriebenen Zeichnungen ist ein Konverter 1 zur Durchführung des Verfahrens wiedergegeben.

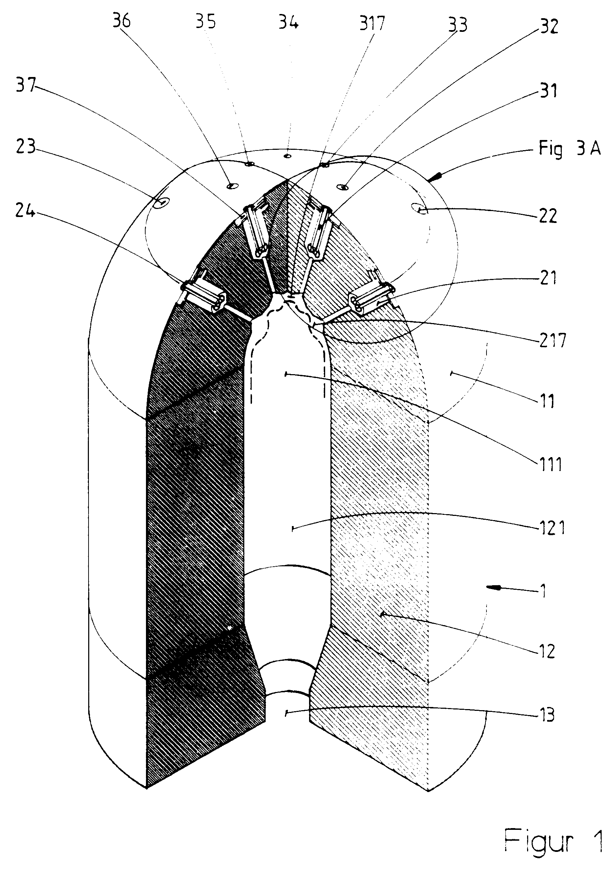

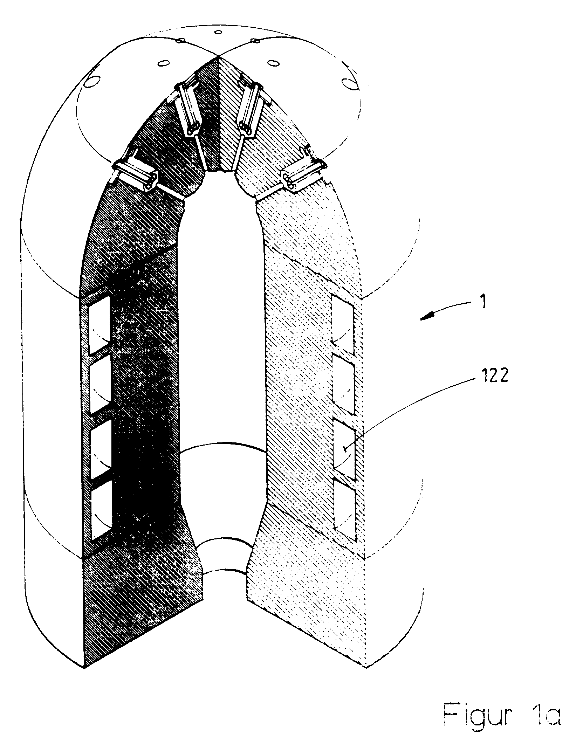

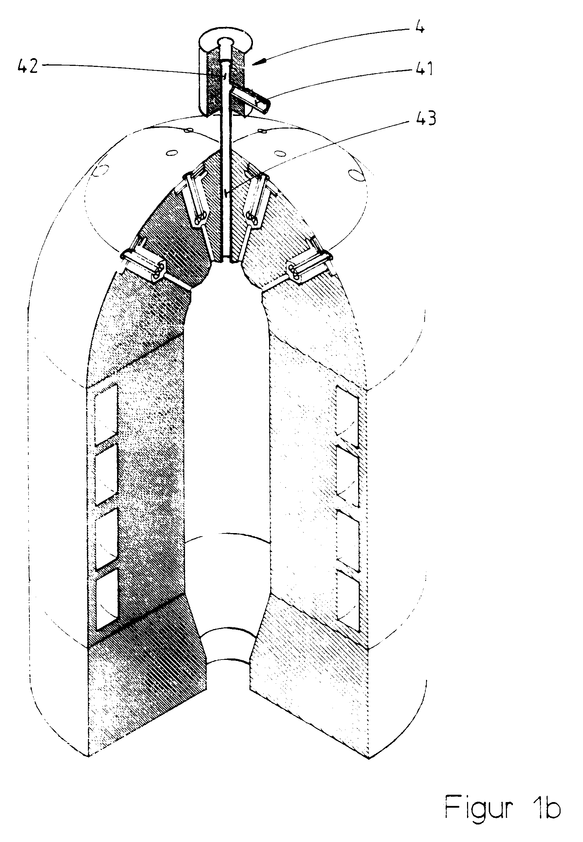

Figur 1 zeigt den Konverter 1 mit einem sinkrechten rechtwinkeligen Ausschnitt, so daß der innere Aufbau des Konverters 1 sichtbar ist. Der Konverter 1 enthält einen Hauptreaktionsraum 121 und eine Austrittsdüse 13 für die Reaktionsprodukte der Hauptreaktion. Im Kopf 11 des Konverters 1 befinden sich die Einspeisungseinheiten 21, 22, 23, 24 für das erste Gasgemisch und die Einspeisungseinheiten 31, 32, 33, 34, 35, 36, 37 für das zweite Gasgemisch. Die jeweils angegebene Anzahl von vier bzw. sieben Einspeisungseinheiten sind nur als ein Beispiel anzusehen, es können ohne weiteres jeweils mehr oder auch weniger Einspeisungseinheiten vorhanden sein. Etwa im gestrichelt eingezeichneten Bereich 111 findet die vorbeschriebene Hauptreaktion statt. Vorzugsweise bestehen der Kopf 11, das Hauptteil 12 und die austrittsdüse 13 des Konverters 1 aus einem äußeren Metallmantel mit einer Keramikauskleidung.

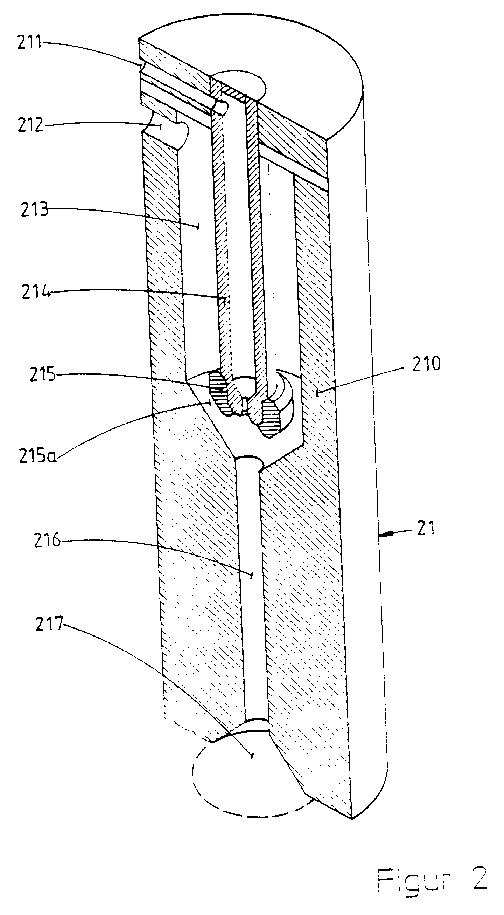

In Figur 2 ist eine Einspeisungseinheit 21 im vergrößerten Maßstab wiedergegeben. Die Einspeisungseinheiten 31 haben den identischen Aufbau, so daß die nachfolgende detaillierte Beschreibung der Einspeisungseinheit 21 auch für die Einspeisungseinheit 31 gilt. In der Zeichnung ist oben die Zufuhrleitung 211 des ersten Reaktionspartners, z.B. Methan, und darunter die Zufuhrleitung 212 für den zweiten Reaktionspartner, z.B. Luft, erkennbar. Der zweite Reaktionspartner wird in den mantelförmigen Zwischenraum 213 zwischen der Einspeisungsnadel 214 des ersten Reaktionspartners und dem Gehäuse 210 der Einspeisungseinheit 21 eingeleitet. über eine in die Nadel 214 integrierte oder anderweitig befestigte Blende 215 wird bereits vor dem Zusammentreffen der beiden Reaktionspartner eine Turbulenz erzeugt. Diese Turbulenz pflanzt sich dann - in der Figur 2 nach unten - in einen mit sehr hoher Strömungsgeschwindigkeit durchströmten Mischkanal 216 fort. Anstelle der Blende 215 können auch ein oder mehrere andere Mittel zur Erzeugung der Turbulenz gewählt werden.

In Figur 1A ist der Konverter 1 nach Figur 1 mit Vorheizkanälen 122 im Haupttteil 12 wiedergegeben. In diesen Vorheizkanälen 122 können ein oder beide Reaktionspartner vorgeheizt werden, wodurch die Reaktionsfähigkeit und -bereitschaft erhöht wird. Werden einer Einspeisungseinheit 21 vorgewärmte Reaktionspartner zugeführt, so muß die Turbulenz bereits bestehen, bevor sich die Reaktionspartner mischen.

Bei dem in Figur 2 dargestellten Mischkanal 216 handelt es sich um einen röhrenförmigen Kanal mit einer entsprechenden Oberflächengestaltung. Ein solcher röhrenförmiger, mit sehr hoher Strömungsgeschwindigkeit durchströmter Mischkanal ist fertigungstechnisch sehr einfach herzustellen. Jedoch sind ihm strömungstechnische Grenzen gesetzt. Anstelle des röhrenförmigen Mischkanals 216 sind auch andere Formen möglich. Es muß nur gewährleistet sein, daß die Strömung eine sehr hohe Strömungsgeschwindigkeit hat und keine Bereiche vorhanden sind, in denen es innerhalb von Wirbeln oder ruhigen Zonen zur Unterschreitung der notwendigen Strömungsgeschwindigkeit kommt. Diese Unterschreitung würde zu einer bereits oben beschriebenen verfrühten Reaktion führen.

Das Zusammentreffen der beiden Reaktionspartner erfolgt in dem mit sehr hoher Strömungsgeschwindigkeit durchströmten ringförmigen Spalt 215a

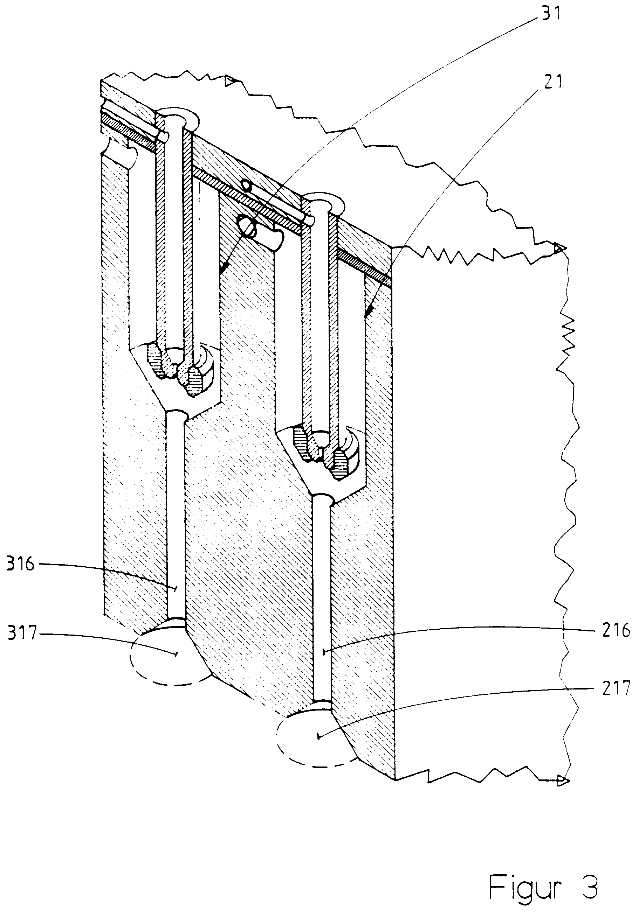

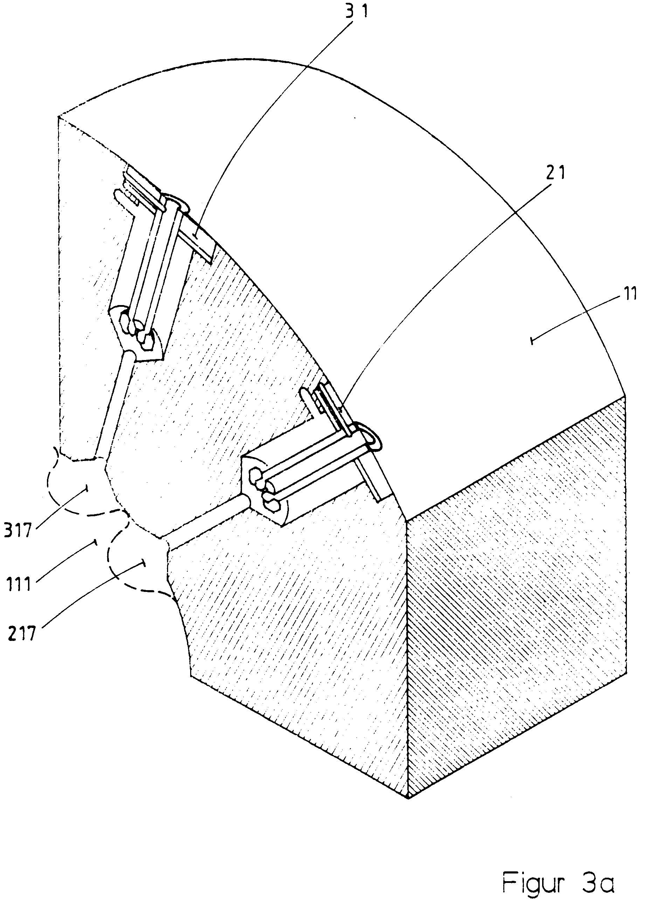

Figur 3 zeigt eine Einspeisungseinheit 21 mit dem mit sehr hoher Strömungsgeschwindigkeit durchströmten Mischkanal 216 und den Übergang in den mit niedrigerer Strömungsgeschwindigkeit durchströmten Reaktionsbereich 217 für die Reaktionspartner der ersten Teilreaktion sowie eine Einspeisungseinheit 31 mit dem mit sehr hoher Strömungsgeschwindigkeit durchströmten Mischkanal 316 und den Übergang in den mit niedrigerer Strömungsgeschwindigkeit durchströmten Reaktionsbereich 317 für die Reaktionspartner der zweiten Teilreaktion.

Diese beiden parallel dargestellten Einspeisungseinheiten 21, 31 können auch, wie in Figur 3A dargestellt ist, in einem Neigungswinkel zueinander angeordnet sein, was die Mischung der beiden Teilreaktionen zur Hauptreaktion begünstigt. Figur 3A zeigt wie Figur 1 zwei Teilreaktionsbereiche 217, 317 der ersten und zweiten Teilreaktion. In diesem Fall sind die Teilreaktionsbereiche 217, 317 so angeordnet, daß sie kugelsegmentförmig in den mit geringerer Strömungsgeschwindigkeit durchströmten Hauptreaktionsbereich 111 münden. Dadurch kommt es bei den Haupt- oder Umwandlungsreaktionen zu einer besseren überlagerung und damit zu einer besseren Durchmischung der Teilreaktionen. In diesem Fall bildet sich in dem mit geringerer Strömungsgeschwindigkeit durchströmten Hauptreaktionsbereich 111 ein Brennpunkt aus, in dem die Gesamtreaktion überwiegend stattfindet.

In Figur 1B ist der Konverter 1 mit einer Pilotanlage 4 wiedergegeben. Die Pilotanlage 4 ist durch den Strömungskanal 43 mit dem Hauptreaktionsraum 121 verbunden und dient bei Inbetriebnahme des Konverters 1 durch eine nicht dargestellte Zündeinrichtung zur sicheren Zündung des durch die Einspeisungseinheiten 21 - 24 einströmenden energieliefernden ersten Gasgemisches. Die Pilotanlage 4 besteht aus einer Zufuhrleitung 41 für ein Zündgas, einem Zündraum 42 mit mindestens einer nicht dargestellten Zündeinrichtung und dem in den Hauptreaktionsraum 121 mündenden Strömungskanal 43.

Während des Betriebs des Konverters 1 kann die Pilotanlage 4 zur Gasentnahme aus dem Reaktionsraum 121 dienen um die Hauptreaktionsprodukte laufend zu überwachen. Über die Pilotanlage 4 können jedoch auch weitere an der Hauptreaktion beteiligte Reaktionspartner zugeführt werden.

Beim Betrieb des vorbeschriebenen Konverters 1 stellen sich konstante, stabile Umsetzungsraten ein, die im Vergleich mit dem bisher technisch Möglichen extrem hoch sind. Gleichzeitig sind der Energieaufwand und der apparative Aufwand wesentlich kleiner. Dies ist auch deshalb der Fall, weil der Konverter 1 die kleinstmögliche Außenoberfläche und damit die geringsten Wärmeverluste durch Konvektion und Abstrahlung von der Außenoberfläche hat.

### Bezugszeichenliste

- 1: Konverter
- 11: Kopf
- 111: Hauptreaktionsbereich
- 12: Hauptteil
- 121: Hauptreaktionsraum
- 122: Vorheizkanäle
- 13: Austrittsdüse
- 21: Einspeisungseinheit für das erste Gasgemisch
- 210: Gehäuse
- 211: Zufuhrleitung
- 212: Zufuhrleitung
- 213: Zwischenraum
- 214: Einspeisnadel
- 215: Blende
- 215a: ringförmiger Spalt
- 216: Mischkanal
- 217: Teilreaktionsbereich
- 22,23,24: Einspeisungseinheiten
- 31: Einspeisungseinheit für das zweite Gasgemisch
- 316: Mischbereich
- 317: Teilreaktionsbereich
- 32-37: Einspeisungseinheiten
- 4: Pilotanlage
- 41: Zufuhrleitung
- 42: Zündraum
- 43: Strömungskanal

## Patentansprüche

1. Verfahren zur themothermischen Umsetzung fließfähiger oder in einen fließfähigen Zustand überführbarer Verbindungen (Einsatzstoffe), insbesondere organischer oder komplexer toxischer Verbindungen in niedermolekulare organische oder anorganische Verbindungen in einem Plasma oder einem plasmaähnlichen heißen Gas, bestehend aus mindestens einem Vorverfahrensschritt mit Reaktionspartnern, die zu einer exothermen Reaktion führen, zur Erzeugung der Energie für die Umsetzungsreaktion und mindestens einem nachfolgenden Hauptverfahrensschritt mit der Umsetzungsreaktion, dadurch gekennzeichnet, daß im Vorverfahrensschritt in einem Mischbereich mit relativ kleinem Querschnitt die Strömungsgeschwindigkeiten der Reaktionspartner größer sind als die Ausbreitungsgeschwindiglkeit einer möglichen Reaktiorsfront der beiden Reaktionspartner, wodurch eine vollständige Durchmischung der unter überdruck stehenden und ein exothermes Stoffgemisch bildenden Reaktionspartrer im Mischbereich erfolgt, ohne daß dieses Gemisch bereits im Mischbereich reagieren kann, am Ende des Mischbereiches nach einer durch Vergrößerung des Strömungsquerschnitts herbeigeführten Verringerung der Strömungsgeschwindigkeit, beide Reaktionspartner, dem überdruck entsprechend mit hoher Reaktionsgeschwindigkeit und Energiedichte in einer ersten Teilreaktion miteinander reagieren und im Hauptverfahrensschritt ein zweites umzusetzendes Stoffgemisch, bestehend aus dem Einsatzstoff und einem Umsetzungsstoff, die zur Umsetzung benötigte Energie durch Mischung mit den in einem hohen Temperatur- und Druckzustand befindlicher Reaktionsprodukten der ersten Teilreaktion von diesen erhält.

2. Verfahren nach Anspruch 1, gekennzeichnet durch einen zweiten, mit dem ersten annähernd parallel ablaufenden Vorverfahrensschritt für das zweite Stoffgemisch mit einer Mischphase, in der eine vollständige Durchmischung des ebenfalls unter überdruck stehenden Einsatzstoffes mit dem Umsetzungsstoff erfolgt, ohne daß das zweite Stoffgemisch in der Mischphase reagieren kann.

3. Verfahren nach Anspruch 2, dadurch gekennzeichnet, daß in der oder am Ende der Mischphase des zweiten Vorverfahrensschrittes bereits eine Teilreaktion erfolgt.

4. Verfahren nach Anspruch 2 oder 3, insbesondere zur Zerlegung chemisch stabiler Verbindungen, dadurch gekennzeichnet, daß das erste Stoffgemisch ein Gasgemisch, bestehend aus einem Brennstoff und einem Sauerstoffträger und das zweite Stoffgemisch ein Gasgemisch, bestehend aus dem Einsatzstoff und dem gleichen oder einem anderen Brennstoff ist.

5. Konverter zur Durchführung des Verfahrens nach einem der Ansprüche 1 bis 4, mit einem Hauptreaktionsraum (121) mit einer Austrittsdüse (13) für die Reaktionsprodukte, mindestens einer ersten Einspeisungseinheit (21) für die Zufuhr des ersten Gasgemisches in den Reaktionsraum (121) und mindestens einer zweiten Einspeisungseinheit (31) zur Zufuhr des zweiten Gasgemisches, dadurch gekennzeichnet, daß jede Einspeisungseinheit (21) aus Zufuhrteilen (211, 212, 213, 214, 215) zur getrennten Zufuhr der das Plasma oder plasmaähnliche heiße Gasgemisch bildenden Gase und einen als Mischbereich dienenden und in den Hauptreaktionsraum (121) mündenden Mischkanal (216) besteht, wobei infolge seines entsprechend kleiner gewählten Querschnitts die Strömungsgeschwindigkeit des Gasgemisches im Mischkanal (216) größer ist als die Ausbreitungsgeschwindigkeit einer möglichen Reaktionsfront des Gasgemisches.

6. Konverter nach Anspruch 5 oder 6, dadurch gekennzeichnet, daß das Kopfteil (11) des Konverters (1) die Form einer Kugelkalotte hat und die Austrittsdüse (13) etwa dem Kopfteil (11) gegenüber angeordnet ist.

7. Konverter nach Anspruch 6, dadurch gekennzeichnet, daß die Mischkanäle (216, 316) der im Konverterkopf (11) angeordneten Einspeisungseinheiten (21, 31) radial verlaufen und die Achsen der Mischkanäle (216, 316) sich etwa in einem Schnittpunkt im Hauptreaktionsraum (121) schneiden.

8. Konverter nach Anspruch 6 oder 7 , dadurch gekennzeichnet, daß die Einspeisungseinheiten (21-24) für das erste Gasgemisch auf einem auf den Konverterkopf (11) liegenden äußeren Kreis und die Einspeisungseinheiten (31 - 37) für das zweite Gasgemisch auf einem inneren Kreis liegen

9. Konverter nach einem der Ansprüche 5 bis 8 , gekennzeichnet durch eine Piloteinrichtung (4) am Reaktionsraum (121) zur Zündung des einströmenden ersten Gasgemisches.

10. Konverter nach Anspruch 9 , dadurch gekennzeichnet, daß die Piloteinrichtung (4) aus einer Zufuhrleitung (41), einem Zündraum (42) mit mindestens einer Zündeinrichtung und einem Strömungskanal (43) besteht, wobei der Strömungskanal (43) in den Reaktionsraum (121) mündet.

11. Konverter nach Anspruch 9 oder 10, dadurch gekennzeichnet, daß die Pilotanlage (4) nach Beendigung des Zündvorganges und während des Betriebs des Konverters (1) für die Gasentnahme aus dem Reaktionsraum (121) zur Gasanalyse dient.

12. Konverter nach einem der Ansprüche 5 bis 11, dadurch gekennzeichnet, daß der Konverter (1) aus einem Metallmantel mit Keramikauskleidung des Reaktionsraumes (121) besteht.

13. Konverter nach einem der Ansprüche 5 bis 12, gekennzeichnet durch Vorheizkanäle (122) zur Vorheizung eines oder mehrer Gase.

## Claims

1. Method for the chemothermal conversion of fluid compounds or compounds convertible into a fluid state (feedstocks), in particular organic or complex toxic compounds, into low-molecular organic or inorganic compounds in a plasma or a plasma-like hot gas, consisting of at least one preliminary method step with reaction partners which lead to an exothermic reaction, for the production of energy for the conversion reaction and at least one following main method step with the conversion reaction, characterised in that in the preliminary method step in a mixing region with relatively small cross-section the flow speeds of the reaction partners are greater than the speed of propagation of a possible reaction front of the two partners, whereby a complete intermixing of the reaction partners, which are under excess pressure and form an exothermic substance mixture, takes place in the mixing region without this mixture being able to already react in the mixing region, the two reaction partners react with each other in a first partial reaction at the end of the mixing region after a reduction in flow speed produced by increase of the flow cross-section and at high reaction speed and energy density according to the excess pressure, and a second substance mixture, which consists of the feedstock and a conversion substance and which is to be converted, receives the energy needed for conversion from the reaction products, which are in a state of high temperature and pressure, of the first partial reaction by mixing with these in the main method step.

2. Method according to claim 1, characterised by a second preliminary method step which runs down approximately in parallel with the first, for the second substance mixture with a mixing phase, in which a complete intermixing of the feedstock, which similarly stands under excess pressure, with the conversion substance takes place without the second substance mixture being able to react in the mixing phase.

3. Method according to claim 2, characterised in that a partial reaction takes place already in or at the end of the mixing phase of the second preliminary method step.

4. Method according to claim 2 or 3, in particular for the decomposition of chemically stable compounds, characterised in that the first substance mixture is a gas mixture consisting of a fuel and an oxygen carrier and the second substance mixture is a gas mixture consisting of the feedstock and the same or a different fuel.

5. Converter for the performance of the method according to one of claims 1 to 4, with a main reaction chamber (121) with an exit nozzle (13) for the reaction products, at least one first charging unit (21) for the feed of the first gas mixture into the reaction chamber (121) and at least one second charging unit (31) for the feed of the second gas mixture, characterised in that each charging unit (21) consists of feed parts (211, 212, 213, 214, 215) for the separate feed of the gases forming the plasma or plasma-like hot gas mixture and a mixing channel (216), which serves as mixing region and opens into the main reaction chamber (121), wherein in consequence of a cross-section selected to be appropriately smaller the speed of flow of the gas mixture in the mixing channel (216) is greater than the speed of propagation of the reaction front of the gas mixture.

6. Converter according to claim 5 or 6, characterised in that the head part (11) of the converter (1) has the form of a spherical cap and the exit nozzle (13) is arranged approximately opposite the head part (11).

7. Converter according to claim 6, characterised in that the mixing channels (216, 316) of the charging units (21, 31), arranged in the converter head (11) extend radially and the axes of the mixing channels (216, 316) intersect approximately at a point of intersection in the main reaction chamber (121).

8. Converter according to claim 6 or 7, characterised in that the charging units (21 to 24) for the first gas mixture lie on an outer circle lying on the converter head (11) and the charging units (31 to 37) for the second gas mixture lie on an inner circle.

9. Converter according to one of the claims 5 to 8, characterised by a pilot device (4) at the reaction chamber (121) for ignition of the inflowing first gas mixture.

10. Converter according to claim 9, characterised in that the pilot device (4) consists of a feed duct (41), an ignition chamber (42) with at least one ignition device and a flow channel (43), wherein the flow channel (43) opens into the reaction chamber (121).

11. Converter according to claim 9 or 10, characterised in that the pilot device (4) after termination of the ignition process and curing operation of the converter (1) serves for gas extraction from the reaction chamber (121) for gas analysis.

12. Converter according to one of the claims 5 to 11, characterised in that the converter (1) consists of a metal casing with ceramic lining of the reaction chamber (121).

13. Converter according to one of the claims 5 to 12, characterised by preheating channels (122) for the preheating of one or more gases.

## Revendications

1. Procédé de conversion chimiothermique de composés fluides ou de composés pouvant être mis à l'état fluide (charge d'alimentation), en particulier des composés toxiques organiques ou complexes, en des composés organiques ou minéraux de faible masse moléculaire au sein d'un plasma ou d'un gaz chaud de type plasma, comprenant au moins une étape préliminaire avec des partenaires de réaction, qui conduit à une réaction exothermique destinée à produire l'énergie nécessaire à la réaction de conversion, suivie d'au moins une étape principale avec la réaction de conversion, caractérisé en ce que, dans l'étape préliminaire, les vitesses d'écoulement des partenaires de réaction sont, dans une région de mélange ayant une section relativement faible, supérieures à la vitesse de propagation d'un front possible de réaction des deux partenaires, si bien qu'il se produit dans ladite région de mélange un mélange mutuel complet des partenaires de réaction, qui sont sous une pression excessive et forment un mélange de substances exothermique, sans que ce mélange puisse déjà réagir dans la région de mélange, les deux partenaires de réaction réagissant l'un avec l'autre dans une première réaction partielle à la fin de la région de mélange, après une diminution de la vitesse d'écoulement produite par une augmentation de la section d'écoulement et à de fortes vitesse de réaction et densité d'énergie compte tenu de la pression excessive, et un deuxième mélange de substances, qui comprend la charge d'alimentation et une substance de conversion et qui doit être converti, reçoit l'énergie nécessaire à la conversion des produits de réaction, se trouvant à haute température et sous forte pression, de la première réaction partielle par mélange avec eux dans l'étape principale.

2. Procédé selon la revendication 1, caractérisé par une deuxième étape préliminaire, qui a lieu approximativement en parallèle avec la première, concernant le deuxième mélange de substances avec une phase de mélange, dans laquelle se produit un mélange mutuel complet de la charge d'alimentation, qui elle aussi est sous pression excessive, avec la substance de conversion sans que ce deuxième mélange de substances ne puisse réagir dans la phase de mélange.

3. Procédé selon la revendication 2, caractérisé en ce qu'une réaction partielle se produit déjà dans la phase de mélange de la deuxième étape préliminaire ou à la fin de cette dernière.

4. Procédé selon la revendication 2 ou 3, servant en particulier à la décomposition de composés chimiquement stables, caractérisé en ce que le premier mélange de substances est un mélange gazeux contenant un combustible et un porteur d'oxygène et le deuxième mélange de substances est un mélange gazeux contenant la charge d'alimentation et le même combustible ou un combustible différent.

5. Convertisseur servant à mettre en oeuvre le procédé de l'une quelconque des revendications 1 à 4, comprenant une chambre de réaction principale (121) avec une tuyère de sortie (13) pour les produits de réaction, au moins une première unité de chargement (21) servant à amener le premier mélange gazeux dans la chambre de réaction (121) et au moins une deuxième unité de chargement (31) servant à amener le deuxième mélange gazeux, caractérisé en ce que chaque unité de chargement (21) comprend des parties d'alimentation (211, 212, 213, 214, 215) servant à l'envoi séparé des gaz formant le plasma ou le mélange de gaz chauds de type plasma et un canal de mélange (216) qui sert de région de mélange et débouche dans la chambre de réaction principale (121) et dans lequel, du fait que la section a été choisie pour être plus petite de manière appropriée, la vitesse d'écoulement du mélange gazeux dans le canal de mélange (216) est supérieure à la vitesse de propagation du front de réaction du mélange gazeux.

6. Convertisseur selon la revendication 5 ou 6, caractérisé en ce que la partie d'entrée (11) du convertisseur a la forme d'une calotte sphérique et la tuyère de sortie (13) est disposée approximativement à l'opposé de la partie d'entrée (11).

7. Convertisseur selon la revendication 6, caractérisé en ce que les canaux de mélange (216, 316) des unités de chargement (21, 31) disposés dans l'entrée (11) du convertisseur s'étendent radialement et les axes de ces canaux de mélange (216, 316) se croisent approximativement en un point d'intersection situé dans la chambre de réaction principale (121).

8. Convertisseur selon la revendication 6 ou 7, caractérisé en ce que les unités de chargement (21 à 24) du premier mélange gazeux se situent sur un cercle extérieur formé sur l'entrée (11) du convertisseur et les unités de chargement (31 à 37) du deuxième mélange gazeux se situent sur un cercle intérieur.

9. Convertisseur selon l'une quelconque des revendications 5 à 8, caractérisé par un dispositif pilote (4) situé au niveau de la chambre de réaction (121) et servant à enflammer le premier mélange gazeux qui arrive.

10. Convertisseur selon la revendication 9, caractérisé en ce que le dispositif pilote (4) comprend un conduit d'alimentation (41), une chambre d'allumage (42) avec au moins un dispositif d'allumage et un canal d'écoulement (43), ledit canal d'écoulement (43) débouchant dans la chambre de réaction (121).

11. Convertisseur selon la revendication 9 ou 10, caractérisé en ce que le dispositif pilote (4) sort, une fois terminée l'opération d'allumage et pendant le fonctionnement du convertisseur (1), à extraire du gaz de la chambre de réaction (212) en vue de son analyse.

12. Convertisseur selon l'une quelconque des revendications 5 à 11, caractérisé en ce que le convertisseur (1) comprend une enceinte en métal avec une chemise en céramique dans la chambre de réaction (121).

13. Convertisseur selon l'une quelconque des revendications 5 à 12, caractérisé par des canaux de préchauffage (122) servant à préchauffer un ou plusieurs des gaz.
